# EUROPEAN PATENT APPLICATION

(11) **EP 3 053 950 A1**
(43) Date of publication of application: **10.08.2016**
(21) Application number: 14849307.5
(22) Date of filing: 24.09.2014
(51) Int. Cl.: C08J 9/18, C08K 5/01, C08L 25/04, C08L 31/04

(54) **POLYSTYRENE-CONTAINING COMPOSITE RESIN PARTICLES AND METHOD FOR PRODUCING SAME, EXPANDABLE COMPOSITE RESIN PARTICLES, PRE-EXPANDED PARTICLES, AND EXPANDED MOLDED ARTICLE**

(30) Priority: 30.09.2013 JP 2013204803
(71) Applicant: Sekisui Plastics Co., Ltd., Osaka-shi, Osaka 530-0047 (JP)
(72) Inventor: GONDO, Yuichi, Koka-shi Shiga 528-0056 (JP); MORISHIMA, Naoya, Koka-shi Shiga 528-0056 (JP)
(74) Representative: Hoffmann Eitle
(86) International application number: PCT/JP2014/075246
(87) International publication number: WO 2015/046227

(57) **Abstract**

Polystyrene-based composite resin particles comprising 100 to 500 parts by weight of a polystyrene-based resin with respect to 100 parts by weight of an ethylene-vinyl acetate copolymer resin,
wherein the polystyrene-based composite resin particles are impregnated with a volatile blowing agent and are pre-expanded to obtain pre-expanded particles;
the obtained pre-expanded particles are immersed in tetrahydrofuran for 24 hours to obtain an extract A; and the pre-expanded particles are divided into two halves through the center to prepare halved particles, and the halved particles are immersed in tetrahydrofuran for 24 hours to obtain an extract B; and
the obtained extract A and extract B are subjected to a GPC (gel permeation chromatography) measurement and obtain the following results:
the polystyrene-based resin having a weight-average molecular weight (Mw) of 100,000 to 500,000 gives a peak obtained from chromatograms for the extract A and for the extract B; and
a ratio Ps : Pi stands at 1 : 10 or higher, in which Ps indicates peak top intensity of the chromatogram for the extract A, and Pi indicates peak top intensity of the chromatogram for the extract B; or
a ratio Ss : Si stands at 1 : 10 or higher, in which Ss indicates a peak area of the chromatogram for the extract A, and Si indicates a peak area of the chromatogram for the extract B.

## Description

### TECHNICAL FIELD

The present invention relates to polystyrene-containing composite resin particles (polystyrene-based composite resin particles) and a method for producing the same, expandable composite resin particles, pre-expanded particles, and an expanded molded article. The present invention can provide the polystyrene-based composite resin particles capable of reducing cohesion of the expandable composite resin particles at a time of impregnation with a blowing agent and at a time of pre-expansion and capable of improving productivity thereof.

### BACKGROUND ART

Expanded molded articles comprising a polystyrene-based resin have been frequently used as packaging materials or thermal insulating materials because such expanded molded articles have excellent shock-absorbing and thermal insulating properties and are readily formable. These expanded molded articles are, however, insufficient in impact resistance and in plasticity and thus become cracked or chipped easily; therefore, these expanded molded articles are not suited for packaging some items such as precision apparatuses.

On the other hand, expanded molded articles comprising a polyolefin-based resin are excellent in impact resistance and in resilience but require large-scale equipment at a time of molding these articles. Moreover, because of its properties, the polyolefin-based resin needs to be transported in the form of pre-expanded particles from a raw material maker to a molding and processing maker. Since the pre-expanded particles that are bulky need to be transported, some problems arise such as high production costs.

Because of these reasons, various polystyrene-based composite resin particles having the different merits of the above-described two resins and expanded molded articles using these resin particles have been suggested.

For example, Japanese Unexamined Patent Application Publication No. 2011-202110 (Patent Document 1) discloses a method for pre-expanding expandable thermoplastic resin particles containing 100 to 400 parts by weight of a polystyrene relative to 100 parts by weight of a polyolefin resin having a melting point of 117 to 145°C in a closed pre-expansion tank set at a gauge pressure of 0.02 to 0.15 MPa so as to obtain pre-expanded particles.

This method is regarded as inhibiting the expandable thermoplastic resin particles from blocking each other at the time of the pre-expansion and as drastically shortening time of the pre-expansion.

Japanese Unexamined Patent Application Publication No. 2008-133449 (Patent Document 2) discloses expandable polystyrenic resin particles produced by including a volatile blowing agent into polystyrenic resin particles obtained through formation of a polystyrenic resin by impregnating a styrenic monomer into polyolefinic resin particles followed by polymerizing the monomer, wherein 140 to 600 parts by mass of the styrenic monomer on the basis of 100 parts by mass of the polyolefinic resin particles is used for the impregnation and the polymerization; the polystyrenic resin particles are divided into two halves through the center from a surface of the resin particles so as to soak the halved particles in tetrahydrofuran and to extract a polystyrenic resin component; cross-section surfaces of the halved particles are photographed by a scanning electron microscope and are observed to have an outer skin layer being 15 to 150 µm in average thickness; and the expandable polystyrenic resin particles contain 5.5 to 13.0% by mass of the volatile blowing agent.

These resin particles are regarded as being capable of improving a shelf life thereof - that has been a problem of traditional expandable polystyrenic resin particles - and as being capable of providing an expanded molded product excellent in crack resistance.

### CITATION LIST

### PATENT LITERATURES

Patent Document 1: Japanese Unexamined Patent Application Publication No. 2011-202110
Patent Document 2: Japanese Unexamined Patent Application Publication No. 2008-133449

### SUMMARY OF INVENTION

### TECHNICAL PROBLEMS

As described above, the method of Patent Document 1 regulates the expansion conditions so as to inhibit the pre-expanded particles from blocking each other at the time of the pre-expansion and to shorten the pre-expansion time.

This method, however, does not focus attention on cohesion of the expandable composite resin particles at a time of impregnation with a blowing agent. Furthermore, this method cannot be used if the polyolefin resin in an ethylene-vinyl acetate copolymer has a melting point of 117°C or lower, although the melting point of the polyolefin resin is set at 117 to 145°C.

Moreover, to meet the expansion conditions of this method, sealable high-pressure expansion equipment is necessary, leading to high costs for installing the equipment.

The technique of Patent Document 2 does not focus attention on cohesion of the expandable composite resin particles and does not even mention or indicate the cohesion. Namely, Patent Document 2 does not specify any conditions for sealing a polymerization reaction system during the production of the resin particles, with the result that a correlation is uncertain between the sealing of the system and the cohesion of the resin particles, the cohesion of the expandable composite resin particles after the production of the resin particles, and the cohesion of pre-expanded particles.

Traditional techniques in general produced resin particles through the following steps: In the 1 st polymerization step, a reaction system was sealed in the vicinity of 90°C to degas from the reaction system; in the 2nd polymerization step, the reaction system was opened after or while the reaction system was cooled after the 1 st polymerization step was completed in a case where a polymerization temperature stayed at 100°C or lower during the 2nd polymerization step; and the resin particles were produced in this state. The resin particles produced in this way, however, are likely to cause problems such as cohesion of expandable composite resin particles at a time of impregnation with a blowing agent and at a time of pre-expansion, leading to low productivity.

The present invention, therefore, solves the above-described problems and has an object of providing polystyrene-based composite resin particles and a method for producing the same, expandable composite resin particles, pre-expanded particles, and an expanded molded article; and the polystyrene-based composite resin particles are capable of reducing cohesion of the pre-expanded particles at a time of impregnation with a blowing agent and at a time of pre-expansion and are capable of improving productivity thereof.

### SOLUTION TO PROBLEMS

As a result of considerable deliberation to solve the above-described problems, the inventors of the present invention found the following and achieved the present invention: The cohesion of the pre-expanded particles at the time of the impregnation with the blowing agent and at the time of the pre-expansion is caused by the polystyrene-based resin in the polystyrene-based composite resin particles; the polystyrene-based composite resin particles having an inclined structure - such that the polystyrene-based resin is distributed less at the surface of each polystyrene-based composite resin particle but is distributed more at the core of each polystyrene-based composite resin particle so that the polystyrene-based resin component in the vicinity of the surfaces of the polystyrene-based composite resin particles is unlikely to be extracted - are found to solve the above-described problems; and such polystyrene-based composite resin particles are obtained by meeting polymerization conditions for seed polymerization of monomers - more specifically, such polystyrene-based composite resin particles are obtained by specifying a sealing temperature in a polymerization system.

The present invention, therefore, provides polystyrene-based composite resin particles comprising 100 to 500 parts by weight of a polystyrene-based resin with respect to 100 parts by weight of an ethylene-vinyl acetate copolymer resin,
wherein the polystyrene-based composite resin particles are impregnated with a volatile blowing agent and are pre-expanded to obtain pre-expanded particles;
the obtained pre-expanded particles are immersed in tetrahydrofuran for 24 hours to obtain an extract A; and the pre-expanded particles are divided into two halves through the center to prepare halved particles, and the halved particles are immersed in tetrahydrofuran for 24 hours to obtain an extract B; and
the obtained extract A and extract B are subjected to a GPC (gel permeation chromatography) measurement and obtain the following results:
the polystyrene-based resin having a weight-average molecular weight (Mw) of 100,000 to 500,000 gives a peak obtained from chromatograms for the extract A and for the extract B; and
a ratio Ps : Pi stands at 1 : 10 or higher, in which Ps indicates peak top intensity of the chromatogram for the extract A, and Pi indicates peak top intensity of the chromatogram for the extract B; or
a ratio Ss : Si stands at 1 : 10 or higher, in which Ss indicates a peak area of the chromatogram for the extract A, and Si indicates a peak area of the chromatogram for the extract B.

The present invention also provides expandable composite resin particles comprising the above-described polystyrene-based composite resin particles and a volatile blowing agent.

The present invention further provides pre-expanded particles obtained by pre-expanding the above-described expandable composite resin particles.

Furthermore, the present invention provides an expanded molded article obtained by expanding and molding the above-described pre-expanded particles.

The present invention also provides a method for producing styrene-based composite resin particles, the method comprising:
(A) the 1 st polymerization step including the successive steps of dispersing nucleus particles comprising an ethylene-vinyl acetate copolymer resin in an aqueous medium, of allowing the nucleus particles to absorb a styrene-based monomer, and of heating the nucleus particles so as to allow polymerization, and thereafter;
(B) the 2nd polymerization step of allowing the nucleus particles to absorb the styrene-based monomer while the styrene-based monomer polymerizes, and thereafter;
(C) the crosslinking step of heating the nucleus particles to 100°C or higher so as to process and crosslink the remaining monomer,
wherein a system is sealed and kept at lower than 90°C while the nucleus particles are heated during Step (A).

### ADVANTAGEOUS EFFECTS OF INVENTION

The present invention can provide polystyrene-based composite resin particles and a method for producing the same; expandable composite resin particles; pre-expanded particles; and an expanded molded article, the polystyrene-based composite resin particles being capable of reducing cohesion of the pre-expanded particles at a time of impregnation with a blowing agent and at a time of pre-expansion and being capable of improving productivity thereof.

Namely, the productions of the expandable composite resin particles using the polystyrene-based composite resin particles of the present invention, of the pre-expanded particles, and of the expanded molded article may improve productivity thereof because the cohesion is drastically reduced at the time of the impregnation with the blowing agent and at the time of the pre-expansion.

The polystyrene-based composite resin particles of the present invention further exert the above-described excellent effects in a case where the peak top intensity ratio Ps : Pi stands at 1 : 30 or higher, or in a case where the peak area ratio Ss : Si stands at 1 : 30 or higher.

### BRIEF DESCRIPTION OF DRAWINGS

[Figure 1] Figure 1 exhibits chromatograms of pre-expanded particles of Example 1: Fig. 1(a) exhibits the chromatogram of particles; and Fig. 1(b) exhibits the chromatogram of halved particles.
[Figure 2] Figure 2 exhibits chromatograms of pre-expanded particles of Comparative Example 1: Fig. 2(a) exhibits the chromatogram of particles; and Fig. 2(b) exhibits the chromatogram of halved particles.

### DESCRIPTION OF EMBODIMENTS

### (1) Polystyrene-based composite resin particles

Polystyrene-based composite resin particles of the present invention (hereinafter also referred to as "composite resin particles") comprise 100 to 500 parts by weight of a polystyrene-based resin with respect to 100 parts by weight of an ethylene-vinyl acetate copolymer resin,
wherein the polystyrene-based composite resin particles are impregnated with a volatile blowing agent and are pre-expanded to obtain pre-expanded particles;
the obtained pre-expanded particles are immersed in tetrahydrofuran for 24 hours to obtain an extract A; and the pre-expanded particles are divided into two halves through the center to prepare halved particles, and the halved particles are immersed in tetrahydrofuran for 24 hours to obtain an extract B; and
the obtained extract A and extract B are subjected to a GPC (gel permeation chromatography) measurement and obtain the following results:
the polystyrene-based resin having a weight-average molecular weight (Mw) of 100,000 to 500,000 gives a peak obtained from chromatograms for the extract A and for the extract B; and
a ratio Ps : Pi stands at 1 : 10 or higher, in which Ps indicates peak top intensity of the chromatogram for the extract A, and Pi indicates peak top intensity of the chromatogram for the extract B; or
a ratio Ss : Si stands at 1 : 10 or higher, in which Ss indicates a peak area of the chromatogram for the extract A, and Si indicates a peak area of the chromatogram for the extract B.

Peak intensity and a peak area of the chromatograms for the extract A and for the extract B, which are obtained by an RI detector, vary depending upon a concentration of the polystyrene-based resin contained in the composite resin particles of the present invention; and the polystyrene-based resin is eluted into tetrahydrofuran. Namely, this means that the higher the peak intensity of the chromatograms is, the higher content the polystyrene-based resin is contained in the extracts.

The GPC measurement will be detailed in Examples.

The inventors of the present invention conceived of the following: The chromatogram for the extract A obtained from the pre-expanded particles may indicate features such as an amount of the polystyrene component in the vicinity of surfaces of the composite resin particles, and a dispersion state and a branch state of the polystyrene component; and the chromatogram for the extract B obtained from the halved particles may indicate an approximate amount of the polystyrene component in the whole composite resin particles.

The inventors also conceived of the following: The high peak intensity and the large peak area of the chromatogram for the extract A obtained from the pre-expanded particles may bring about a state where the polystyrene component in the surfaces of the composite resin particles is likely to be extracted; and the composite resin particles may be affected in terms of a quantitative aspect as well as grafting and crosslinking.

The inventors further conceived of the following: Comparisons of the peak top intensity and the peak area between the chromatogram for the extract A obtained from the pre-expanded particles and the chromatogram for the extract B obtained from the halved particles may indicate a distribution state of the polystyrene component in the composite resin particles from the surface down to the inside and extractability of the polystyrene component in the vicinity of the surfaces of the composite resin particles; and these comparisons may index a cause of cohesion at the time of the impregnation with the blowing agent and at the time of the pre-expansion.

Since the halved pre-expanded particles have an increased surface area that is to be in contact with tetrahydrofuran, it is easily conceivable that the halved pre-expanded particles elute more amount of the polystyrene component than the pre-expanded particles elute.

To the inventors' surprise, the composite resin particles of the present invention in which the cohesion of the resin particles is successfully reduced are found to have a more-than-expected feature such that there is a great difference in amount of the extracted polystyrene component between the composite resin particles of Examples and the composite resin particles of Comparative Examples, as is evident from the undermentioned results of Examples and Comparative Examples.

The composite resin particles of the present invention have another feature such that although expandable composite resin particles are likely to develop cohesion at a time when composite resin particles are impregnated with a blowing agent, and a polystyrene-based resin component is extracted from the vicinity of surfaces of the composite resin particles because the blowing agent exerts a plasticizing effect and functions as a binder, the composite resin particles of the present invention are capable of reducing such cohesion.

The composite resin particles of the present invention have another feature such that although expandable composite resin particles are likely to develop cohesion at a time when the expandable composite resin particles are pre-expanded to obtain pre-expanded particles because the resin is softened by being heated by steam, etc., the composite resin particles of the present invention are capable of reducing such cohesion.

### (a) Peak top intensity and a peak area ratio obtained from chromatograms of pre-expanded particles

As described above, the peak top intensity and the peak area ratio of the chromatograms of the pre-expanded particles are recognized to regulate the inclined structure of the distribution of the polystyrene-based resin in the polystyrene-based composite resin particles of the present invention and the polystyrene content to be extracted.

In the present invention, a peak of a weight-average molecular weight (Mw) within the range from 100,000 to 500,000 in the obtained chromatograms is considered an index. Any other peaks than the above-described peak are not considered in the present invention. It seems that the cohesion generated in the polystyrene-based resin component is caused by the above-described peak.

A low-molecular component is not recognized to cause a large amount of cohesion at the time of the impregnation with the blowing agent and at the time of the pre-expansion, because the low-molecular component becomes powdery or the like and is released from the system even if the low-molecular component is extracted.

Note that whether a peak of a chromatogram is derived from a polystyrene-based resin may be confirmed in a known manner such as a gas chromatography.

A ratio Ps : Pi stands at 1 : 10 or higher, in which Ps indicates peak top intensity of a chromatogram for the extract A obtained from the pre-expanded particles, and Pi indicates peak top intensity of a chromatogram for the extract B obtained from the halved particles; or
a ratio Ss : Si stands at 1 : 10 or higher, in which Ss indicates a peak area of a chromatogram for the extract A obtained from the pre-expanded particles, and Si indicates a peak area of a chromatogram for the extract B obtained from the halved particles.

The inventors of the present invention confirm that the peak top intensity ratio correlates with the peak area ratio.

The ratio Ps : Pi is, for example, 1 : 10, 1 : 15, 1 : 20, 1 : 25, 1 : 30, 1 : 35, 1 : 40, 1 : 45, 1 : 50, 1 : 55, 1 : 60, 1 : 65, 1 : 70, 1 : 75, 1 : 80, 1 : 85, 1 : 90, 1 : 95 or 1 : 100; and preferably 1 : 30 or higher, and more preferably 1 : 35 or higher.

The ratio Ss : Si is, for example, 1 : 10, 1 : 15, 1 : 20, 1 : 25, 1 : 30, 1 : 35, 1 : 40, 1 : 45, 1 : 50, 1 : 55, 1 : 60, 1 : 65, 1 : 70, 1 : 75, 1 : 80, 1 : 85, 1 : 90, 1 : 95 or 1 : 100; and preferably 1 : 30 or higher, and more preferably 1 : 35 or higher.

### (b) Polystyrene-based resin (PS)

There are no particular limitations on the polystyrene-based resin contained in the polystyrene-based composite resin particles so long as such is a resin having a styrene-based monomer as a main component, and styrene or a styrene derivative alone or as a copolymer can be mentioned.

As the styrene derivative, α-methylstyrene, vinyl toluene, chlorostyrene, ethylstyrene, isopropylstyrene, dimethylstyrene, bromostyrene, and the like can be mentioned. These styrene-based monomers may be used alone or may be combined.

The polystyrene-based resin may contain a vinyl-based monomer that is copolymerizable with the styrene-based monomer.

As the vinyl-based monomer, for example, multifunctional monomers such as divinylbenzenes such as o-divinylbenzene, m-divinylbenzene, and p-divinylbenzene, acrylonitrile, methacrylonitrile, acrylic acid, methacrylic acid, acrylic acid alkyl esters, alkylene glycol di(meth)acrylates such as ethylene glycol di(meth)acrylate and polyethylene glycol di(meth)acrylate; methyl (meth)acrylate; butyl (meth)acrylate; and the like can be mentioned. The monomers may be used alone or may be combined.

Also, when the monomers are combined, it is desirable that the content thereof is set so that the styrene-based monomer is an amount so as to become the main component (for example, 50% by weight or more).

In the present invention, "(meth)acryl" means "acryl" or "methacryl."

### (c) Ethylene-vinyl acetate copolymer resin (EVA)

There are no particular limitations on the ethylene-vinyl acetate copolymer resin contained in the polystyrene-based composite resin particles, such as no limitations on a weight ratio of the ethylene and the vinyl acetate, so long as the ethylene and the vinyl acetate form the copolymer.

An example of the weight ratio of the ethylene and the vinyl acetate in the copolymer is, for example, 85 to 99% by weight of the ethylene and 1 to 15% by weight of the vinyl acetate; and more specifically, as examples of the copolymer there may be mentioned commercialized products, as used in Examples.

The composite resin particles of the present invention comprise 100 to 500 parts by weight of the polystyrene-based resin with respect to 100 parts by weight of the ethylene-vinyl acetate copolymer resin.

If the polystyrene-based resin is less than 100 parts by weight with respect to 100 parts by weight of the ethylene-vinyl acetate copolymer resin, expandability and molding processability may become insufficient.

On the other hand, if the polystyrene-based resin exceeds 500 parts by weight with respect to 100 parts by weight of the ethylene-vinyl acetate copolymer resin, impact resistance and plasticity may become insufficient.

The polystyrene-based resin (parts by weight) is, for example, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490 or 500 with respect to 100 parts by weight of the ethylene-vinyl acetate copolymer resin.

The polystyrene-based resin is preferably 120 to 450 parts by weight with respect to 100 parts by weight of the ethylene-vinyl acetate copolymer resin and more preferably 130 to 410 parts by weight.

### (d) Particle diameter of composite resin particles

The composite resin particles are desirably 0.5 to 3.0 mm in average particle diameter.

If the average particle diameter of the composite resin particles is less than 0.5 mm, the composite resin particles may not have high expandability.

On the other hand, if the average particle diameter of the composite resin particles exceeds 3.0 mm, fillingness of the pre-expanded particles may become insufficient at the time of molding and processing an article.

The average particle diameter (mm) of the composite resin particles is, for example, 0.5, 1.0, 1.5, 2.0, 2.5 or 3.0.

The average particle diameter of the composite resin particles is preferably 0.5 to 2.0 mm.

### (2) Method for producing polystyrene-based composite resin particles

The polystyrene-based composite resin particles of the present invention may be produced, for example, by a method comprising:
(A) the 1 st polymerization step including the successive steps of dispersing ethylene-vinyl acetate copolymer resin-containing nucleus particles in an aqueous medium, of allowing the nucleus particles to absorb a styrene-based monomer, and of heating the nucleus particles so as to allow polymerization, and thereafter;
(B) the 2nd polymerization step of allowing the nucleus particles to absorb the styrene-based monomer while the styrene-based monomer polymerizes, and thereafter;
(C) the crosslinking step of heating the nucleus particles to 100°C or higher so as to process and crosslink the remaining monomer,
wherein a system is sealed and kept at lower than 90°C while the nucleus particles are heated during Step (A).

In the 1 st polymerization step of Step (A), the styrene-based monomer is absorbed into the nucleus particles at a temperature that does not substantially allow the polymerization of the styrene-based monomer; and then the nucleus particles are heated so as to allow the polymerization.

During heating in this step, the system is sealed at lower than 90°C so as to polymerize the monomer. Since the system is sealed after the styrene-based monomer is absorbed, a lower limit of a sealing temperature is comparable to a temperature that allows the absorption of the styrene-based monomer. To seal the system at a temperature lower than the temperature allowing the absorption of the styrene-based monomer, the system needs to be cooled and then heated again, leading to poor productivity and low efficiency such as high energy consumption.

In a case where the sealing temperature - i.e., the temperature that allows the absorption of the styrene-based monomer into the ethylene-vinyl acetate copolymer - stays at, for example, lower than ambient temperature of 25°C, the absorption of the styrene-based monomer into the ethylene-vinyl acetate copolymer becomes inefficient, leading to expenditure of time and to high energy consumption during heating, with the result that productivity may be deteriorated.

In a case where the sealing temperature stays at 90°C or higher, an amount of the cohered particles increases at a time when the composite resin particles are impregnated with the blowing agent and at a time of pre-expansion, as will be described in Examples and Comparative Examples below.

The sealing temperature (°C) is, for example, 30, 35, 40, 45, 50, 55, 60, 65, 70, 75, 80 or 85.

The sealing temperature is preferably from 30°C or higher to lower than 90°C, and more preferably 50°C or higher to lower than 90°C. Moreover, its upper limit is preferably 85°C or lower.

In Step (A), the styrene-based monomer absorbed into the ethylene-vinyl acetate copolymer polymerizes at 100°C or higher. Although it depends upon which polymerization initiator is selected, it is preferable that the polymerization is carried out at temperatures of 110°C to 140°C. In this case, a pressure (ambient pressure criteria) in the system is in the order of 0.05 to 0.5 Mpa.

After the polymerization is completed, the nucleus particles are cooled and move on to Step (B). In this case, if the pressure in the system has a possibility of decreasing to 0.0 Mpa, the system should be temporarily left open in order to prevent the pressure reduction in the reactor during cooling.

In Step (B), the styrene-based monomer is introduced into the system retained, for example, at 80 to 95°C and polymerizes while being absorbed into the composite resin particles.

It is preferable that Step (B) is carried out under sealed conditions. Reasons for this include - although the inventors of the present invention are not quite sure why - that the styrene-based monomer improves in absorption rate and efficiency. In this case, the pressure in the system is 0.0 to 0.1 Mpa.

Temperature conditions during Step (C) include 100°C or higher - for example, 130 to 145°C. In Step (C), the monomer that did not react completely in Step (B) is forced to polymerize and is processed, and also is allowed to crosslink. In this case, the pressure in the system is in the order of 0.05 to 0.6 Mpa.

Rates of temperature increase and temperature decrease (cooling rate) vary depending upon an outside air temperature; however, the preferable rates are 0.3 to 3.0°C/min. on the basis of an entire period from an initiation temperature to a purposive temperature; and more preferably 0.4 to 2.5°C/min.

### (a) Nucleus resin particles (hereinafter also referred to as "seed particles")

The ethylene-vinyl acetate copolymer resin may function as nucleus resin particles and may be obtained, for example, by melting and kneading a raw resin by an extruder, by extruding the raw resin in the form of a strand, and by cutting the strand so as to have a desired particle diameter or cutting the strand by an underwater cutting method.

A resin extruding hole of a dice is desirably 0.2 to 1.0 mm in diameter to obtain a predetermined size of the nucleus resin particles. It is desirable that a resin temperature of the resin extruded from the extruder is adjusted to be 200 to 300°C at a dice inlet.

The desired nucleus resin particles are obtained by adjusting the extruder, a screw structure, the dice, extrusion conditions, and underwater cutting conditions.

The nucleus resin particles may contain additives such as a compatibilizing agent, a cell regulator, a pigment, an antistatic agent, and a flame retardant, as long as the additives do not deteriorate any effects of the present invention.

A particle diameter of the nucleus resin particles may be properly adjusted according to the average particle diameter of the composite resin particles; and the particle diameter ranges preferably from 0.4 to 1.5 mm and more preferably 0.4 to 1.0 mm. An average weight of the nucleus resin particles is 30 to 90 mg per 100 particles. Examples of a shape of the nucleus resin particles include sphere-shaped, oval-shaped (egg-shaped), cylindrical, and prismatic.

### (b) Polymerization initiator

It is desirable that the polymerization initiator is used in the aforementioned production method. As the polymerization initiator, there are no particular limitations so long as such has been conventionally used in the polymerization of styrene-based monomers and, for example, organic peroxides such as benzoyl peroxide, lauryl peroxide, t-butyl peroxybenzoate, t-butyl peroxy-2-ethylhexanoate, t-butyl peroxide, t-butyl peroxypivalate, t-butyl peroxyisopropylcarbonate, t-butyl peroxyacetate, 2,2-bis(t-butylperoxy)butane, t-butylperoxy-3,3,5-trimethylhexanoate, di-t-butylperoxyhexahydroterephthalate, 2,2-di-t-butylperoxybutane, di-t-hexylperoxide, and dicumyl peroxide; azo compounds such as azobisisobutyronitrile and azobisdimethylvaleronitrile; and the like can be mentioned. These may be used alone or in combination, but preferably multiple polymerization initiators whose decomposition temperature for obtaining a half-life of 10 hours is from 60 to 130°C are used in combination.

### (c) Suspension stabilizer

Furthermore, in the aforementioned production method, a suspension stabilizer may be used in order to stabilize dispersion of styrene-based monomer droplets and nucleus resin particles. As such suspension stabilizer, there are no particular limitations so long as such has been conventionally used in the suspension polymerization of styrene-based monomers and, for example, water-soluble polymers such as polyvinyl alcohol, methyl cellulose, polyacrylamide, and polyvinyl pyrrolidone; poorly-soluble inorganic compounds such as tribasic calcium phosphate, hydroxyapatite, and magnesium pyrophosphate; and the like can be mentioned.

Also, when a poorly-soluble inorganic compound is used, normally an anionic surfactant is combined.

As such anionic surfactant, for example, fatty acid soap; N-acylamino acids or salts thereof; carboxylates such as alkyl ether carboxylates; sulfonates such as alkyl benzene sulfonates, alkyl naphthalene sulfonates, dialkyl sulfosuccinic acid ester salts, alkyl sulfoacetates, and α-olefin sulfonates; sulfuric acid ester salts such as higher alcohol sulfuric acid ester salts, secondary higher alcohol sulfuric acid ester salts, alkyl ether sulfates, and polyoxyethylene alkyl phenyl ether sulfates; phosphoric acid ester salts such as alkyl ether phosphoric acid ester salts and alkyl phosphoric acid ester salts; and the like can be mentioned.

### (d) Other components

The composite resin particles may contain any of the following additives: a plasticizer, a cell regulator, a crosslinking agent, a flame retardant, a flame-retardant auxiliary agent, a lubricant, a coloring agent, and an antistatic agent, as long as the additives do not deteriorate any properties of the composite resin particles.

As the plasticizer, phthalic acid esters; glycerin fatty acid esters such as glycerin diacetomonolaurate, glycerin tristearate, and glycerin diacetomonostearate; adipic acid esters such as diisobutyl adipate; coconut oil; and the like can be mentioned.

A plasticizer content in the composite resin particles is desirably 0.1 to 3.0% by weight.

As the cell regulator, ethylene bisstearic acid amides, polyethylene wax, and the like can be mentioned.

As the crosslinking agent, organic peroxides such as 2,2-di-t-butyl peroxybutane, 2,2-bis(t-butylperoxy)butane, dicumyl peroxide, 2,5-dimethyl-2,5-di-t-butyl peroxyhexane, and the like can be mentioned.

As the flame retardant, tris(2,3-dibromopropyl) isocyanurate, tetrabromocyclooctane, hexabromocyclododecane, trisdibromopropylphosphate, tetrabromobisphenol A, tetrabromobisphenol A-bis(2,3-dibromo-2-methylpropyl ether), tetrabromobisphenol A-bis(2,3-dibromopropyl ether), and the like can be mentioned.

As the flame-retardant auxiliary agent, organic peroxides such as 2,3-dimethyl-2,3-diphenyl butane, 3,4-dimethyl-3,4-diphenyl hexane, dicumyl peroxide, and cumene hydroperoxide can be mentioned.

As the lubricant, paraffin wax, zinc stearate, and the like can be mentioned.

As the coloring agent, inorganic-based pigments such as carbon black such as furnace black, Ketchen black, channel black, thermal black, acetylene black, graphite, and carbon fiber; chromates such as chrome yellow, zinc yellow, and barium yellow; ferrocyanides such as Prussian blue; sulfides such as cadmium yellow and cadmium red; oxides such as iron black and red oxide; silicates like ultramarine blue; and titanium oxide; and organic-based pigments such as azo pigments such as monoazo pigments, disazo pigments, azo lakes, condensed azo pigments, and chelate azo pigments; and polycyclic pigments such as phthalocyanine-based pigments, anthraquinone-based pigments, perylene-based pigments, perinone-based pigments, thioindigo-based pigments, quinacridone-based pigments, dioxazine-based pigments, isoindolinone-based pigments, and quinophthalone-based pigments can be mentioned.

As the antistatic agent, polyoxyethylene alkylphenol ethers, stearic acid monoglycerides, polyethylene glycol, and the like can be mentioned.

### (e) Stirring

As a shape and a structure of the polymerization vessel, there are no particular limitations so long as such has been conventionally used for the polymerization of styrene-based monomers or the like.

As a stirring blade, there are no particular limitations as long as a stirring required power is configurable within a predetermined range.

More specifically, examples of the stirring blade include paddle blades such as a V-type paddle blade, a pitched paddle blade, a flat paddle blade, a Pfaudler blade, and a pull margin blade; turbine blades such as a turbine blade and a fan turbine blade; and propeller blades such as a Marin propeller blade. Of these stirring blades, the paddle blades are preferable; and more preferably the V-type paddle blade, the pitched paddle blade, the flat paddle blade, the Pfaudler blade and the pull margin blade. The stirring blade may be either a single-stage blade or a multistage blade.

As regards a size of the stirring blade, there are no particular limitations as long as the stirring required power is configurable within a predetermined range. It is desirable that the stirring required power meets a stirring condition such as being adjusted to be 0.06 to 0.8 kw/m³.

Moreover, the polymerization vessel may be provided with a baffle plate (baffle).

### (3) Expandable composite resin particles

The expandable composite resin particles comprise the composite resin particles and the volatile blowing agent and may be produced by impregnating the composite resin particles with the volatile blowing agent by using a publicly known method.

Examples of the publicly known method include the following: The blowing agent is pressed into the polymerization vessel in which the composite resin particles - in which the polymerization of the styrene-based monomer is completed - are dispersed in the aqueous medium so that the composite resin particles are impregnated with the blowing agent; and the composite resin particles are supplied into a sealable-and-warmable pressure-resistant rotary mixing machine, and then the blowing agent is pressed thereinto so that the composite resin particles are impregnated with the blowing agent.

Low temperatures may require a time to impregnate the composite resin particles with the volatile blowing agent and may deteriorate production efficiency of the expandable composite resin particles, while high temperatures may cause cohesion of the expandable composite resin particles significantly; therefore, temperatures are preferably from 30 to 100°C and more preferably 40 to 80°C.

At a time when the composite resin particles are impregnated with the volatile blowing agent, any of the following agents may be added thereto as needed: a surface preparation agent such as a binding inhibitor, an antistatic agent, or a fusion accelerator; a plasticizer; a lubricant; and a coloring agent.

### (a) Blowing agent

As the volatile blowing agent, there are no particular limitations so long as such has been conventionally used in the expansion of polystyrene-based resins. As examples of the volatile blowing agent there may be mentioned aliphatic hydrocarbons having 5 or less carbons such as isobutane, n-butane, isopentane, n-pentane, and neopentane; and butane-based blowing agents and pentane-based blowing agents in particular are preferable. Note that pentane may be expected to act as a plasticizer.

A content of the volatile blowing agent in the expandable composite resin particles is normally in the range of from 2 to 12% by weight; however, preferably in the range of from 3 to 10% by weight and particularly preferably in the range of from 3 to 8% by weight.

If a content of the volatile blowing agent is low - for example, less than 2% by weight, a low-density expanded molded article may not be obtainable from the expandable composite resin particles; and since an effect of increasing a secondary expansion force cannot be achieved at the time of expanding and molding an article in the cavity, an appearance of the expanded molded article may deteriorate. On the other hand, if a content of the volatile blowing agent is high - for example, exceeding 12% by weight, the time required for the cooling step in the production process of an expanded molded article using the expandable composite resin particles may increase, leading to low productivity in some situations.

### (b) Blowng auxiliary agent

The expandable composite resin particles may contain a blowing auxiliary agent together with the blowing agent.

As the blowing auxiliary agent, there are no particular limitations so long as such has been conventionally used in the expansion of polystyrene-based resins. For example, aromatic organic compounds such as styrene, toluene, ethylbenzene, and xylene; cyclic aliphatic hydrocarbons such as cyclohexane and methylcyclohexane; and plasticizers such as ethyl acetate, butyl acetate, diisobutyl adipate, diacetylated monolaurate, and coconut oil can be mentioned.

A content of the blowing auxiliary agent in the expandable composite resin particles is normally in the range of from 0.3 to 2.5% by weight and preferably 0.4 to 2% by weight.

If a content of the blowing auxiliary agent is low - for example, less than 0.3% by weight, a plasticization effect of the polystyrene-based resin may not be exhibited. On the other hand, if a content of the blowing auxiliary agent is high - for example, exceeding 2.5% by weight, an appearance of an expanded molded article to be obtained by expanding the expandable composite resin particles may deteriorate because of shrinkage and melting occurring to the expanded molded article, or a time required for the cooling step in the production process of the expanded molded article using the expandable composite resin particles may increase.

### (4) Pre-expanded particles

The pre-expanded particles may be obtained by pre-expanding the expandable composite resin particles until a predetermined bulk expansion ratio by a publicly known method; and examples of the publicly known method include batch-type expansion and continuous expansion that introduce steam, and emission expansion carried out under pressure.

It is desirable that the expandable composite resin particles are pre-expanded until a bulk expansion ratio of 5 to 70.

In a case where the bulk expansion ratio of the expandable composite resin particles is higher than 70, an expanded molded article is likely to shrink; and its appearance may be deteriorated.

In a case where the bulk expansion ratio of the expandable composite resin particles is lower than 5, merit in reducing weight of an expanded molded article may deteriorate.

The bulk expansion ratio (times) of the expandable composite resin particles is, for example, 5, 10, 15, 20, 25, 30, 35, 40, 45, 50, 55, 60, 65 or 70.

To pre-expand the expandable composite resin particles, air may be introduced as needed together with the steam. In the case of introducing the steam so as to pre-expand the expandable composite resin particles, steam having a gauge pressure of about 0.005 to 0.03 Mpa is normally introduced.

### (5) Expanded molded article

An expanded molded article is obtained by a publicly known method such that a mold of a foam molding machine is fed with the pre-expanded particles, and the pre-expanded particles are heated again so that the particles are expanded and thermally fused.

It is desirable that the expanded molded article is formed by being expanded until a bulk expansion ratio of 5 to 70.

The bulk expansion ratio (times) of the expanded molded article is, for example, 5, 10, 15, 20, 25, 30, 35, 40, 45, 50, 55, 60, 65 or 70.

### EXAMPLES

In the following, the present invention will be explained in detail through the use of Examples and Comparative Examples; however, the following Examples are merely the exemplifications of the present invention; and the present invention should not be limited only to these Examples.

In the Examples and the Comparative Examples, the obtained composite resin particles and pre-expanded particles were evaluated as follows.

Peak top intensity ratio and a peak area ratio obtained from chromatograms of pre-expanded particles

### GPC measurement

Pre-expanded particles similar to the obtained pre-expanded particles are divided into two halves through the center to prepare halved particles.

0.02 g of whole expandable composite resin particles and 0.02 g of the halved particles are placed in two 50-mL conical flasks, respectively; and 20 mL of ambient temperature tetrahydrofuran is also added thereto in such a way as to infiltrate tetrahydrofuran into the pre-expanded particles; and then the flasks are left at ambient temperature for 24 hours.

Twenty four hours later, each of the tetrahydrofuran solutions is filtered through a non-aqueous 0.45-µm chromatodisc to obtain an extract A of the whole particles and an extract B of the halved particles.

The obtained extract A and extract B are subjected to a GPC measurement under the following conditions:
- Apparatus: high-speed GPC apparatus
- Trade name: HLC-8320 GPC Eco SEC-Work Station manufactured by Tosoh Corporation (with a built-in RI detector)
- Analysis conditions
   Column: TSK gel Super HZM-H x 2 (4.6 mm ID x 15 cm L x 2) Guard column: TSK guard column Super HZ-H x 1 (4.6 mm ID x 2 cm L)
   Flow rate: 0.175 ml/min. on the sample side and 0.175 ml/min.
   on the reference side
   Detector: built-in RI detector
   Injected amount: 50 µL
   Column temperature: 40°C
   System temperature: 40°C
   Eluent: THF

The chromatograms for the extract A and for the extract B obtained by the GPC measurement are subjected to a peak analysis by using an analysis software of Eco SEC-Work Station (manufactured by Tosoh Corporation).

A peak to be analyzed should have a peak top that may be recognized in a case where a retention time is 22 min. or less.

A weight-average molecular weight (Mw) is calculated from a pre-prepared analytical curve of a standard polystyrene.

### (Preparation of an analytical curve of a standard polystyrene)

Used as standard polystyrene specimens for an analytical curve are standard polystyrene specimens (trade name "TSK standard Polystyrene" manufactured by Tosoh Corporation) having a weight-average molecular weight of 500; 2,630; 9,100; 37,900; 102,000; 355,000; 3,840,000 and 5,480,000; and a standard polystyrene specimen (trade name "Shodex Standard" manufactured by Showa Denko K.K.) having a weight-average molecular weight of 1,030,000.

How to prepare the analytical curve is as follows.

The above-described standard polystyrene specimens for the analytical curve are grouped into Group A (consisting of the specimen having a weight-average molecular weight of 1,030,000), Group B (consisting of the specimens having a weight-average molecular weight of 500; 9,100; 102,000 and 3,480,000), and Group C (consisting of the specimens having a weight-average molecular weight of 2,630; 37,900; 355,000 and 5,480,000).

The standard polystyrene specimen of Group A having a weight-average molecular weight of 1,030,000 weighs in at 5 mg and is then dissolved in 20 mL of THF; and 50 µL of the obtained solution is injected into a specimen-side column.

The standard polystyrene specimens of Group B having a weight-average molecular weight of 500; 9,100; 102,000 and 3,480,000 weigh in at 10 mg, 5 mg, 5 mg, and 5 mg, respectively, and are then dissolved in 50 mL of THF; and 50 µL of the obtained solution is injected into a specimen-side column.

The standard polystyrene specimens of Group C having a weight-average molecular weight of 2,630; 37,900; 355,000 and 5,480,000 weigh in at 5 mg, 5 mg, 5 mg, and 1 mg, respectively, and are then dissolved in 40 mL of THF; and 50 µL of the obtained solution is injected into a specimen-side column. A calibration curve (cubic equation) is prepared from a retention time of these standard polystyrene specimens with use of a dedicated data analysis program GPC workstation for HLC-8320 GPC (Eco SEC-WS), and this calibration curve is used as an analytical curve for a polystyrene reduction weight-average molecular weight measurement.

### (Calculation of peak intensity and a peak area obtained from chromatograms)

Peak top intensity and a peak area are calculated, as exhibited in Figures, on the basis that a baseline of the chromatograms is configured in such a way as to maximally widen peak areas in a case where a retention time is 22 min. or less.

A peak area ratio is obtained from a ratio Ss : Si in which Ss indicates a peak area of the chromatogram for the obtained extract A, and Si indicates a peak area of the chromatogram for the obtained extract B.

In the same manner as the above, a peak intensity ratio is obtained from a ratio Ps : Pi in which Ps (mV) indicates peak top intensity of the chromatogram for the obtained extract A, and Pi (mV) indicates peak top intensity of the chromatogram for the obtained extract B.

In a case where the chromatogram is confirmed to have two peaks, the peak area ratio is considered an index of evaluation for determining criteria; however, the peak intensity is not adopted.

In a case where no peak is determinable, it is considered that the polystyrene-based resin has not been practically extracted, with the result that the peak intensity is provisionally set to be 0.1 (mV); and the peak area is provisionally set to be 10.0 (mV x sec.), so as to calculate a peak ratio.

### Cohesion amount (%) at a time of impregnation with a blowing agent

100 g of the expandable composite resin particles are collected after being impregnated with the blowing agent, and a particle consisting of two or more of the cohered expandable composite resin particles is measured for its weight so as to obtain its % by weight.

### Cohesion amount (%) at a time of pre-expansion

300 g of the pre-expanded particles are collected after being pre-expanded, and a particle consisting of two or more of the cohered expandable composite resin particles is measured for its weight so as to obtain its % by weight.

### (Example 1)

### (Production of nucleus resin particles)

An ethylene-vinyl acetate copolymer resin (EVA; manufactured by Japan Polyethylene Corporation; trade name "Novatec EVA LV-115"; melting point: 108°C) was heated and melted in an extruder and was extruded in the form of granulated pellets by an underwater cutting method. (The resin particles were adjusted to be 70 mg per 100 particles.)

### (Production of composite resin particles)

12.0 kg of the obtained nucleus resin particles comprising the ethylene-vinyl acetate copolymer resin were placed in a 100-liter autoclave equipped with a stirrer; and 41 kg of pure water as an aqueous medium, 360 g of magnesium pyrophosphate as a dispersant, and 1.2 g of sodium dodecyl benzenesulfonate as a surfactant were added thereto. The obtained mixture was stirred to obtain a suspension of the aqueous medium, and then the suspension was retained for 10 min. at ambient temperature and was then heated to 60°C.

5 kg of styrene, in which 7 g of dicumyl peroxide was already dissolved as a polymerization initiator, was then added dropwise to the obtained suspension over 30 min. After the completion of the dropping, the suspension was retained for 30 min. at 60°C while being stirred so that the styrene was absorbed into (or impregnated into) the nucleus resin particles.

The suspension was then heated to 130°C and was stirred at the same temperature for 2 hours. Note that the reaction system (i.e., the autoclave) was sealed at the time when the suspension was still kept at 60°C before heating.

The suspension was then decreased (cooled) to about 90°C. Note that once an internal pressure of the autoclave went down to 0 MPa during cooling, the autoclave was opened; and the autoclave was sealed again at 90°C. 15 g of sodium dodecyl benzenesulfonate as a surfactant was added to the suspension. 7.5 kg of styrene, in which 100 g of dicumyl peroxide, 45.3 g of benzoyl peroxide, and 4.2 g of t-butyl peroxide as polymerization initiators were already dissolved, was then added gradually to the suspension so as to allow polymerization at 90°C for 2 hours.

A mixture containing 14.9 kg of styrene, 0.6 kg of butyl acrylate, and 120 g of ethylene bis-stearic acid amide was then added to the suspension over 2 hours so as to allow polymerization for 2 hours.

The suspension was then retained at 90°C for 1 hour and was then heated to 140°C; and then the suspension was retained at the same temperature for 3 hours to complete polymerization. The suspension was then cooled to ambient temperature.

The contents were taken out from the autoclave, and 400 ml of 20% hydrochloric acid was added to the contents so as to decompose the magnesium pyrophosphate; and then the contents were washed and then dehydrated by a centrifuge; and then moisture was eliminated from surfaces of the contents by the use of an airflow drying device, obtaining composite resin particles (EVA/PS = 30/70) containing 233 parts by weight of a styrene-based monomer (PS) with respect to 100 parts by weight of the EVA resin.

### (Production of expandable composite resin particles)

15 kg of the obtained composite resin particles were poured into a 50-liter warmable-and-sealable pressure-resistant rotary mixing machine. 0.5 parts by weight of diisobutyl adipate and 0.1 parts by weight of water with respect to 100 parts by weight of the composite resin particles were also poured thereinto and stirred. 16 parts by weight of butane (normal butane : isobutane = 7 : 3) as a blowing agent with respect to 100 parts by weight of the composite resin particles was pressed into the mixing machine while the composite resin particles were stirred, and the mixture was heated to 70°C and stirred for 2 hours. The mixture was then cooled to 20°C and was taken out from the mixing machine, obtaining expandable composite resin particles.

The expandable composite resin particles were measured for their cohesion amount (%) after being impregnated with the blowing agent.

### (Production of pre-expanded particles)

1 kg of the obtained expandable composite resin particles were immediately poured into a 33-liter batch-type foaming machine, and a gauge pressure 0.01 Mpa of steam was introduced into the foaming machine while the expandable composite resin particles were stirred and heated so as to obtain particles pre-expanded until a bulk expansion ratio of 30.

The pre-expanded particles were measured for their cohesion amount (%) at the time of the pre-expansion.

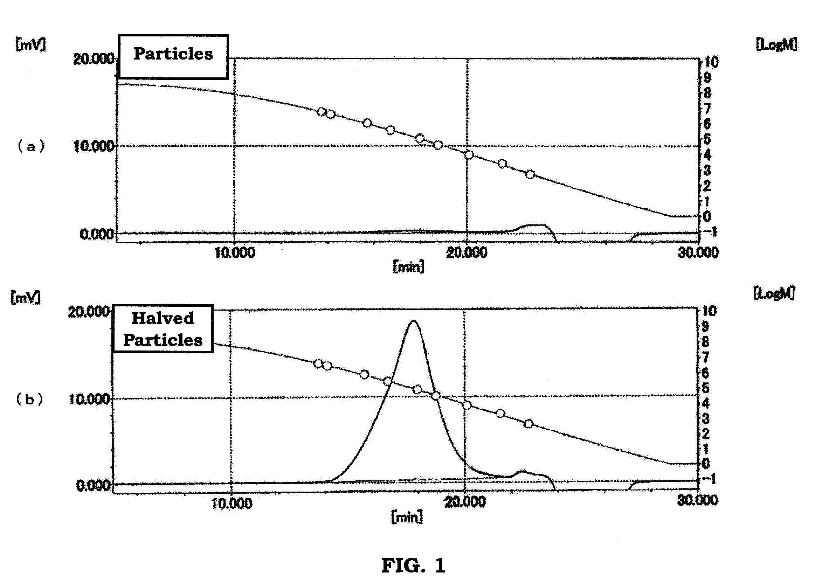

The obtained pre-expanded particles and the halved particles were subjected to a GPC measurement, and a peak recognized from the obtained chromatogram was confirmed to correspond to a peak of the polystyrene-based resin having a weight molecular weight (Mw) of 100,000 to 500,000, obtaining peak top intensity and a peak area as well as a peak top intensity ratio and a peak area ratio (see Fig. 1).

The following Examples were carried out in a similar manner to the above.

### (Production of an expanded molded article)

A molding cavity having an inside dimension of 400 mm long x 300 mm wide x 30 mm thick was fed with the obtained pre-expanded particles pre-expanded until the bulk expansion ratio of 30. 0.08 Mpa of steam was introduced into the molding cavity to heat the pre-expanded particles; and then the pre-expanded particles were cooled so as to obtain a molded article expanded until a bulk expansion ratio of 30. The obtained expanded molded article was dried for about 8 hours in a drying chamber at 30°C.

The results thereby obtained as well as raw materials and production conditions will be indicated in Table 1.

Figure 1 exhibits chromatograms of the pre-expanded particles of Example 1: Fig. 1 (a) exhibits the chromatogram of the particles; and Fig. 1 (b) exhibits the chromatogram of the halved particles.

### (Example 2)

### (Production of nucleus resin particles)

An ethylene-vinyl acetate copolymer resin (EVA; manufactured by Japan Polyethylene Corporation; trade name "Novatec EVA LV-115"; melting point: 108°C) was heated and melted in an extruder and was extruded in the form of granulated pellets by an underwater cutting method. (The resin particles were adjusted to be 40 mg per 100 particles.)

### (Production of composite resin particles)

14.0 kg of the obtained nucleus resin particles comprising the ethylene-vinyl acetate copolymer resin were placed in a 100-liter autoclave equipped with a stirrer; and 41 kg of pure water as an aqueous medium, 403 g of magnesium pyrophosphate as a dispersant, and 1.3 g of sodium dodecyl benzenesulfonate as a surfactant were added thereto. The obtained mixture was stirred to obtain a suspension of the aqueous medium, and the suspension was retained for 10 min. at ambient temperature and was then heated to 60°C.

6 kg of styrene, in which 7.8 g of dicumyl peroxide was already dissolved as a polymerization initiator, was then added dropwise to the obtained suspension over 30 min. After the completion of the dropping, the suspension was retained for 30 min. at 60°C while being stirred so that the styrene was absorbed into (or impregnated into) the nucleus resin particles.

The suspension was then heated to 130°C and was stirred at the same temperature for 2 hours. Note that the reaction system (i.e., the autoclave) was sealed at the time when the suspension was still kept at 60°C before heating.

The suspension was then decreased (cooled) to about 90°C. Note that once an internal pressure of the autoclave went down to 0 MPa during cooling, the autoclave was opened; and the autoclave was sealed again at 90°C. 15 g of sodium dodecyl benzenesulfonate as a surfactant was added to the suspension. 6.6 kg of styrene, in which 98 g of dicumyl peroxide, 46.3 g of benzoyl peroxide, and 4.7 g of t-butyl peroxide as polymerization initiators were already dissolved, was then added gradually to the suspension so as to allow polymerization at 90°C for 2 hours.

A mixture containing 13.1 kg of styrene, 0.3 kg of butyl acrylate, and 120 g of ethylene bis-stearic acid amide was then added to the suspension over 2 hours so as to allow polymerization for 2 hours.

The suspension was then retained at 90°C for 1 hour and was then heated to 140°C; and then the suspension was retained at the same temperature for 3 hours to complete polymerization. The suspension was then cooled to ambient temperature.

In the same manner as in Example 1, composite resin particles, expandable composite resin particles, pre-expanded particles, and an expanded molded article were obtained except as below, to be measured and evaluated: The contents were taken out from the autoclave, and 400 ml of 20% hydrochloric acid was added to the contents so as to decompose the magnesium pyrophosphate; and then the contents were washed and then dehydrated by a centrifuge; and then moisture was eliminated from surfaces of the contents by the use of an airflow drying device, obtaining composite resin particles (EVA/PS = 35/65) containing 183 parts by weight of the styrene-based monomer (PS) with respect to 100 parts by weight of the EVA resin. The results thereby obtained will be indicated in Table 1.

### (Example 3)

In the same manner as in Example 1, composite resin particles, expandable composite resin particles, pre-expanded particles, and an expanded molded article were obtained except as below, to be measured and evaluated: The sealing temperature was set at 80°C during the production of the composite resin particles in Step (A). The results thereby obtained will be indicated in Table 1.

### (Example 4)

In the same manner as in Example 2, composite resin particles, expandable composite resin particles, pre-expanded particles, and an expanded molded article were obtained except as below, to be measured and evaluated: The sealing temperature was set at 80°C during the production of the composite resin particles in Step (A). The results thereby obtained will be indicated in Table 1.

### (Example 5)

In the same manner as in Example 1, composite resin particles, expandable composite resin particles, pre-expanded particles, and an expanded molded article were obtained except as below, to be measured and evaluated: The sealing temperature was set at 80°C during the production of the composite resin particles in Step (A); the polymerization reaction was carried out in the system that was left open during Step (B); and the system was sealed again at the start of the temperature increase (90°C) during Step (C). The results thereby obtained will be indicated in Table 1.

### (Example 6)

In the same manner as in Example 1, composite resin particles, expandable composite resin particles, pre-expanded particles, and an expanded molded article were obtained except as below, to be measured and evaluated: The polymerization reaction was carried out in the system that was left open during the production of the composite resin particles in Step (B); and the system was sealed again at the start of the temperature increase (90°C) during Step (C). The results thereby obtained will be indicated in Table 1.

### (Comparative Example 1)

Nucleus resin particles comprising the ethylene-vinyl acetate copolymer resin were obtained in the same manner as in Example 1. 9.6 kg of the obtained nucleus resin particles comprising the ethylene-vinyl acetate copolymer resin were placed in a 100-liter autoclave equipped with a stirrer; and 48 kg of pure water as an aqueous medium, 382 g of magnesium pyrophosphate as a dispersant, and 7.65 g of sodium dodecyl benzenesulfonate as a surfactant were added thereto. The obtained mixture was stirred to obtain a suspension of the aqueous medium.

4.8 kg of styrene, in which 92.2 g of dicumyl peroxide and 58.2 g of benzoyl peroxide as polymerization initiators were already dissolved, was then added to the suspension; and the suspension was retained for 30 min. at 70°C while being stirred so that the styrene was absorbed into (or impregnated into) the nucleus resin particles.

The suspension was then heated to 85°C; 17.6 kg of styrene was added dropwise to the suspension in the reaction system over 3 hours and 40 min.; and the suspension was retained at the same temperature for 1 hour. The suspension was then heated to 140°C while the system was sealed at the time when the temperature reached 90°C. The suspension was then retained at 140°C for 3 hours and was cooled, and then composite resin particles (EVA/PS = 30/70) were taken out therefrom.

From this point forward, expandable composite resin particles, pre-expanded particles, and an expanded molded article were obtained in the same manner as in Example 1 so as to be measured and evaluated. The results thereby obtained will be indicated in Table 2.

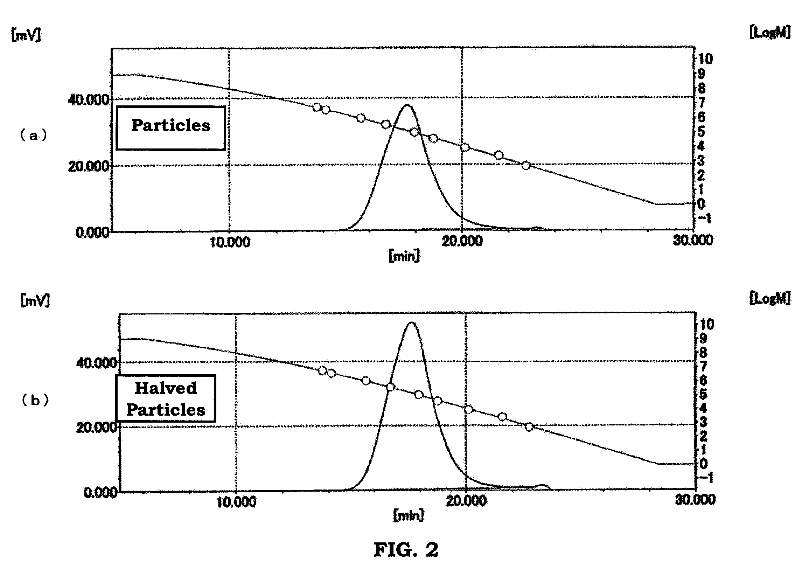

Figure 2 exhibits chromatograms of the pre-expanded particles of Comparative Example 1: Fig. 2(a) exhibits the chromatogram of the particles; and Fig. 2(b) exhibits the chromatogram of the halved particles.

### (Comparative Example 2)

In the same manner as in Comparative Example 1, composite resin particles, expandable composite resin particles, pre-expanded particles, and an expanded molded article were obtained except as below, to be measured and evaluated: EVA/PS = 35/65. The results thereby obtained will be indicated in Table 2.

### (Comparative Example 3)

In the same manner as in Example 1, composite resin particles, expandable composite resin particles, pre-expanded particles, and an expanded molded article were obtained except as below, to be measured and evaluated: The sealing temperature was set at 90°C during the production of the composite resin particles in Step (A); the polymerization reaction was carried out in the system that was left open during Step (B); and the system was sealed again at the start of the temperature increase (90°C) during Step (C). The results thereby obtained will be indicated in Table 2.

### (Comparative Example 4)

In the same manner as in Example 1, composite resin particles, expandable composite resin particles, pre-expanded particles, and an expanded molded article were obtained except as below, to be measured and evaluated: The sealing temperature was set at 90°C during the production of the composite resin particles in Step (A). The results thereby obtained will be indicated in Table 2.

**[Table 1]**

| | | | Ex 1 | Ex 2 | Ex 3 | Ex 4 | Ex 5 | Ex 6 |
|---|---|---|---|---|---|---|---|---|
| Materials | EVA/PS (ratio by wt.) | | 30/70 | 35/65 | 30/70 | 35/65 | 30/70 | 30/70 |
| Polymerization conditions | 1st polymerization step | | Carried out | Carried out | Carried out | Carried out | Carried out | Carried out |
| | Sealing temperature (°C) | | 60 | 60 | 80 | 80 | 80 | 60 |
| | Open or sealed during 2nd polymerization step (sealing temp (°C) at the time of final temp increase) | | Sealed | Sealed | Sealed | Sealed | Open (90) | Open (90) |
| GPC measurement | Composite resin particles (Ps and Ss) | Mw | 353 | 303 | 256 | 199 | 253 | 211 |
| | | Peak (mV) | 0.3 | 0.3 | 0.4 | 0.2 | 1.3 | 0.6 |
| | | Area (mV x sec.) | 48.9 | 20.6 | 43.2 | 20.1 | 172.9 | 64.3 |
| | Halved particles (Pi and Si) | Mw | 270 | 242 | 250 | 239 | 328 | 258 |
| | | Peak (mV) | 18.4 | 24.7 | 16.0 | 11.0 | 23.4 | 14.1 |
| | | Area (mV x sec.) | 2869.5 | 1749.2 | 1675.4 | 1048.6 | 3584.2 | 1579.1 |
| | Peak ratio Ps : Pi | | 1 : 61.3 | 1 : 82.3 | 1 : 40.0 | 1 : 55.0 | 1 : 18.0 | 1 : 23.5 |
| | Peak ratio Ss : Si | | 1 : 58.7 | 1 : 84.9 | 1 : 38.8 | 1 : 52.9 | 1 : 20.7 | 1 : 24.6 |
| Cohesion amount (%) | At the time of impregnation with blowing agent (%) | | 0.0 | 0.0 | 0.0 | 0.0 | 0.0 | 0.0 |
| | At the time of pre-expansion (%) | | 0.1 | 0.1 | 0.2 | 0.1 | 0.8 | 0.6 |

**[Table 2]**

| | | | Comp Ex 1 | Comp Ex 2 | Comp Ex 3 | Comp Ex 4 |
|---|---|---|---|---|---|---|
| Materials | EVA/PS (ratio by wt.) | | 30/70 | 35/65 | 30/70 | 35/65 |
| Polymerization conditions | 1 st polymerization step | | Not carried out | Not carried out | Carried out | Carried out |
| | Sealing temperature (°C) | | 90 | 90 | 90 | 90 |
| | Open or sealed during 2nd polymerization step (sealing temp (°C) at the time of final temp increase) | | X | X | Open (90) | Sealed |
| GPC measurement | Composite resin particles (Ps and Ss) | Mw | 204 | 178 | 221 | 313 |
| | | Peak (mV) | 37.8 | 20.7 | 2.2 | 1.5 |
| | | Area (mV x sec.) | 5399.0 | 2900.3 | 387.7 | 268.5 |
| | Halved particles (Pi and Si) | Mw | 209 | 190 | 269 | 367 |
| | | Peak (mV) | 51.9 | 44.6 | 11.5 | 10.2 |
| | | Area (mV x sec.) | 7277.8 | 6148.4 | 1974.6 | 2012.0 |
| | Peak ratio Ps : Pi | | 1 : 1.4 | 1 : 2.2 | 1 : 5.2 | 1 : 6.8 |
| | Peak ratio Ss : Si | | 1 : 1.3 | 1 : 2.1 | 1 : 5.1 | 1 : 7.5 |
| Cohesion amount (%) | At the time of impregnation with blowing agent (%) | | 0.5 | 0.4 | 0.2 | 0.2 |
| | At the time of pre-expansion (%) | | 3.1 | 3.0 | 1.8 | 1.6 |

It seems that the results indicated in Tables 1 and 2 exhibit the following: The pre-expanded particles of the present invention of Examples 1 to 6 are low in cohesion at the time of the impregnation with the blowing agent and at the time of the pre-expansion, because the peak top intensity ratios Ps : Pi of the polystyrene-based resin stand at 1 : 10 or higher as the results of the GPC measurement, and the amounts of the extracted polystyrene-based resin causing the cohesion of the particle surfaces decrease.

On the other hand, it is found that the traditional pre-expanded particles of Comparative Examples 1 to 4 exhibit that the peak top intensity ratios Ps : Pi of the polystyrene-based resin stand at lower than 1 : 10 as the results of the GPC measurement, and the cohesion amounts increase at the time of the impregnation with the blowing agent and at the time of the pre-expansion.

From the results of Comparative Examples 1 and 2, in the case where the 1 st polymerization step is not carried out in particular, and the sealing temperature stays at 90°C, the peak top intensity ratios Ps : Pi stand at lower than 1 : 10, and it is found that the resin particles of Comparative Examples 1 and 2 are much higher in cohesion at the time of the impregnation with the blowing agent and at the time of the pre-expansion than the resin particles of Comparative Examples 3 and 4.

From the results of Comparative Example 3, in the case where the 1 st polymerization step is carried out while the sealing temperature stays at 90°C during Step (A) and the system is left open during Step (B), it is found that the results are not satisfiable.

From the results of Comparative Example 4, in the case where the 1 st polymerization step is carried out, and the system is not left open during Step (B), but the sealing temperature stays at 90°C, it is found that the peak top intensity ratio Ps : Pi stands at lower than 1 : 10, and the resin particles are high in cohesion at the time of the impregnation with the blowing agent and at the time of the pre-expansion.

As seen from the above, keeping the sealing temperature lower than 90°C at the time of the temperature increase during the 1 st polymerization step (Step (A)) of the production method leads to the results such that the peak intensity ratios Ps : Pi and the peak areas Ss : Si obtained from the chromatograms stand at lower than 10 in the case where the pre-expanded particles are immersed in THF. Furthermore, the peak intensity ratios Ps : Pi lower than 10 and the peak areas Ss : Si lower than 10 are recognized to be capable of reducing the cohesion amounts at the time of the impregnation with the blowing agent and at the time of the pre-expansion.

From the results of Examples 5 and 6, even though the sealing temperature is set to be lower than 90°C during Step (B), but the system is left open during Step (B), the peak intensity Ps : Pi and the peak area Ss : Si have a tendency to become less than those of Examples 1 to 4; and the cohesion amounts of Examples 5 and 6 have a tendency to increase accordingly, with the result that it is found that the system should not be left open during Step (B).

## Claims

1. Polystyrene-based composite resin particles comprising 100 to 500 parts by weight of a polystyrene-based resin with respect to 100 parts by weight of an ethylene-vinyl acetate copolymer resin,
wherein the polystyrene-based composite resin particles are impregnated with a volatile blowing agent and are pre-expanded to obtain pre-expanded particles;
the obtained pre-expanded particles are immersed in tetrahydrofuran for 24 hours to obtain an extract A; and the pre-expanded particles are divided into two halves through the center to prepare halved particles, and the halved particles are immersed in tetrahydrofuran for 24 hours to obtain an extract B; and
the obtained extract A and extract B are subjected to a GPC (gel permeation chromatography) measurement and obtain the following results:
the polystyrene-based resin having a weight-average molecular weight (Mw) of 100,000 to 500,000 gives a peak obtained from chromatograms for the extract A and for the extract B; and
a ratio Ps : Pi stands at 1 : 10 or higher, in which Ps indicates peak top intensity of the chromatogram for the extract A, and Pi indicates peak top intensity of the chromatogram for the extract B; or
a ratio Ss : Si stands at 1 : 10 or higher, in which Ss indicates a peak area of the chromatogram for the extract A, and Si indicates a peak area of the chromatogram for the extract B.

2. The polystyrene-based composite resin particles according to claim 1, wherein the peak top intensity ratio Ps : Pi stands at 1 : 30 or higher, or in a case where the peak area ratio Ss : Si stands at 1 : 30 or higher.

3. Expandable composite resin particles comprising the polystyrene-based composite resin particles according to claim 1 and a volatile blowing agent.

4. Pre-expanded particles obtained by pre-expanding the expandable composite resin particles according to claim 3.

5. An expanded molded article obtained by expanding and molding the pre-expanded particles according to claim 4.

6. A method for producing styrene-based composite resin particles comprising:
(A) the 1 st polymerization step including the successive steps of dispersing nucleus particles comprising an ethylene-vinyl acetate copolymer resin in an aqueous medium, of allowing the nucleus particles to absorb a styrene-based monomer, and of heating the nucleus particles so as to allow polymerization, and thereafter;
(B) the 2nd polymerization step of allowing the nucleus particles to absorb the styrene-based monomer while the styrene-based monomer polymerizes, and thereafter;
(C) the crosslinking step of heating the nucleus particles to 100°C or higher so as to process and crosslink the remaining monomer,
wherein a system is sealed and kept at lower than 90°C while the nucleus particles are heated during Step (A).

7. The method for producing styrene-based composite resin particles according to claim 6, wherein the 2nd polymerization step of Step (B) is carried out in the sealed system.
